# EUROPEAN PATENT SPECIFICATION

(11) **EP 1 570 603 B1**
(45) Date of publication and mention of the grant of the patent: **22.12.2010**
(21) Application number: 03774428.1
(22) Date of filing: 24.11.2003
(51) Int. Cl.: H04L 12/28, H04L 12/66

(54) **A MULTIMEDIA NETWORK SYSTEM FOR INTERCONNECTING A NUMBER OF RECEIVING AND TRANSMITTING DIGITAL AND/OR ANALOGOUS DEVICES**
MULTIMEDIA-NETZSYSTEM ZUR ZUSAMMENSCHALTUNG EINER ANZAHL VON DIGITALEN UND/ODER ANALOGEN EMPFANGS- UND SENDEVORRICHTUNGEN
SYSTEME DE RESEAU MULTIMEDIA POUR INTERCONNECTER UN CERTAIN NOMBRE DE DISPOSITIFS NUMERIQUES ET/OU DISPOSITIFS ANALOGIQUES D'EMISSION ET DE RECEPTION

(30) Priority: 22.11.2002 US 428185 P; 17.01.2003 SE 0300126
(43) Date of publication of application: 07.09.2005
(73) Proprietor: Rouhi, Arash, 413 18 Göteborg (SE)
(72) Inventor: Rouhi, Arash, 413 18 Göteborg (SE)
(74) Representative: Lind, Urban Arvid Oskar
(86) International application number: PCT/SE2003/001821
(87) International publication number: WO 2004/049635

(56) References cited:
- WO-A1-01/19032
- WO-A1-02/11451
- GB-A- 2 359 702
- US-A- 6 005 861
- US-A1- 2002 087 746
- US-A1- 2002 098 854
- US-A1- 2002 098 854
- US-B1- 6 363 434
- US-B1- 6 480 889
- CHEN W Y: "Emerging home digital networking needs" COMMUNITY NETWORKING PROCEEDINGS, 1997 FOURTH INTERNATIONAL WORKSHOP ON ATLANTA, GA, USA 11-12 SEPT. 1997, NEW YORK, NY, USA,IEEE, US, 11 September 1997 (1997-09-11), pages 7-12, XP010251514 ISBN: 0-7803-4290-9

## Description

### FIELD OF INVENTION

The present invention relates to digital networks, and more particularly, to digital networks for home or office use, which provide interconnectivity to products within the home or the office.

### BACKGROUND OF THE INVENTION

A typical home network today is data based and computer-centered (usually personal computer), and emphasizes sharing printers and Internet access within a house. While functional, it is of limited interest to the typical consumer. Audio and video seem to be the most likely candidates to draw the average consumer into home networking. A recent survey conducted by the Consumer Electronics Association found that 61% of respondents liked the idea of being able to watch cable or satellite TV on any television in the home. 59 % of consumers surveyed favored listening to music in any part of the house.

The products at home consist very often of two or several devices, which communicate with each other thorough application-specific cables. For example a HiFi sends audio signals to loudspeakers through wires, a CD player sends audio signals to HiFi/active loudspeakers through composite audio cables, VCR sends audio and video signals through either SCART, composite audio/video or S-video cables to a TV-set, a video projector or another VCR. Additional examples could be the communication between a PC-tower and its peripherals such as cable modem, printer, mouse, keyboard, monitor or a data projector. In all the communication examples above, a source and a destination device may be identified. For example, the VCR is a source device and the TV-set is a destination device. It is quiet often desired by the typical customer to be able to capture the signals from a source device in several destination devices, e.g. being able to connect a VCR to other VCRs and TV-sets in different rooms in home. It is also desired to be able to place or move these devices anywhere at home without needing to extend or re-install the connecting cables. A wireless network might achieve these desires. However these networks are quite expensive for a typical costumer today and still struggle with security issues, which in this case decrease the bandwidth of the network. Even form the environment point of view the wireless solutions are not preferred due to their electromagnetic radiation.

US 5,539,390 discloses a method for setting addresses in a system including a controller for controlling transmission and reception of information signals, and a connection apparatus for connection to a succeeding connection apparatus for transmission and reception of the information signals between the controller and the succeeding connection apparatus. The method includes the steps of supplying a first address setting signal from the controller to the connection apparatus, processing the first address setting signal in a predetermined manner in the connection apparatus to generate a second address setting signal, and providing the second address setting signal selectively to one of the controller and the succeeding connection apparatus. In another class of embodiments, the invention is a method for setting addresses for controlled apparatuses connected in series with a controller, including the steps of supplying an address setting signal from the controller to a first controlled apparatus, processing the address setting signal in the first controlled apparatus to generate a second address setting signal, processing the second address setting signal in a second controlled apparatus to generate a third address setting signal, and feeding back the third address setting signal to the controller through a signal line.

According to US 6,005,861, a home network architecture has an internal digital network interconnecting devices in the home. Entertainment services are introduced into the network through network interface units that are coupled to an external network and to the internal network. The network interface units perform the necessary interfacing between the external and internal networks, and make the entertainment services available to all terminals connected to the internal network. A plurality of set-top electronics that do not have network interface units connect to the internal network and prepare the information in the digital data stream for display, by a television, for example.

US 6,480,889 discloses a scheme for managing the nodes connected to a home network according to their physical location. A communication device constituting each node is formed by at least one communication unit for carrying out communication through a connected network, having communication ports for connecting nodes through which data are to be exchanged by the nodes, and a configuration information regarding a configuration of a communication device having a region for dynamically describing information regarding a location information regarding a physical location of the communication device. The information outlets or access points according to this invention are only provided to localize different IEEE 1394 enabled devices connected in an IEEE 1394 network. The access point is a node like all other nodes and includes information about the place it is installed in. These additional nodes are provided only for purpose of definition of where devices like TV, PC or VCR are.

WO 02/11451 discloses a system architecture for controlled distribution of video and/or audio within a home or a business. This system comprises controller units which transmits control traffic (e.g. request for a certain DVD, TV channel etc) in the reverse link to a mini headend and then presentation units receive the audio/video traffic from the mini headend in the forward link. Thus, the audio/video traffic is only present in a single direction over the different dedicated interfaces between the sources and the mini headend and between the mini headend and the presentation units, respectively. Thus, the system is relatively inflexible and requiring a central head node (mini headend), making it relatively costly both to introduce and to adopt to amended requirements.

MOST is a synchronous network. A timing master supplies a clock and all other devices synchronize their operation to this clock. This technology eliminates the need for buffering and sample rate conversion so that very simple and inexpensive devices can be connected. The technology is similar to what the public switched telephone network uses. There are data channels and control channels defined. The control channels are used to set up what data channels the sender and receiver are to use. Once the connection is established, data can flow continuously and no further processing of packet information is required. This is the optimum mechanism for delivering streaming data (information that flows continuously).

Computer based data, such as Internet traffic or information from a navigation system, is typically sent in short bursts and is often going to many different places. MOST has defined efficient mechanisms for sending asynchronous, packet based data.

The control channel permits devices to send control messages while the data channels are in use so all devices can cleanly start up and shut down the data they are using.

Just as important as the hardware, system software and application programming interfaces (API's) are crucial to insure that devices from different manufacturers can interact with each other. The API's need to be object oriented so applications can concentrate on the functions they provide. They need to be able to control all the features that devices provide on the network, whether from A/V equipment, GPS navigation systems, telephones or telematics systems. The MOST Specification encompasses both the hardware and the software required to implement a multimedia network. MOST defines all seven layers of the OSI reference model so that designers developing applications can concentrate on the functions that affect the end user rather than the complexities of the underlying network. All MOST devices have been designed using this API so compatibility is assured.

### SUMMARY OF THE INVENTION

The present invention has been made in consideration of the above-described problems and needs. The main purpose of this invention is to meet all these desires and more by providing interconnectivity to electrical products in general and home products in particular, such as phones, HIFIs, VCRs, TV-sets and PCs through a relatively inexpensive digital network, for example based on a MOSTnet.

The distribution of control procedure of the network into the access points and gateways removes the need of a separate control unit, hence reducing the costs and the complexity of the home network. The physical interface between all access points and all kind of gateways is identical, hence making use of the home network very flexible. The use of an open network, such as MOSTnet, in certain preferred embodiments also makes the network relatively low cost, as plastic fiber cables may be installed at low cost in a home.

For these reasons, there is provided a multimedia network system for interconnecting a number of receiving and transmitting digital and/or analogous devices according to claim 1. Preferably, the connector arrangements are connected to the terminals through identical interfaces.

According to one embodiment, the system comprises control logic, for handling one or several of: bandwidth allocation request, group connection set-up, group address setting, network status indication, connection status indication, and Terminal initiation. The control logic is provided in at least one of the terminals and/or at least one of the connector arrangements. The control logic provided in at least one connector arrangement can be a transmitting connector, handles one or several of: bandwidth allocation request, group connection set-up, network status indication, and connection status indication. Preferably, the control logic is provided in a least one connector arrangement being a receiving connector handling at least one of: group address setting network status indication, and connection status indication. According to one embodiment the terminal handles at least one of network status indication connection status indication, and terminal initiation at power-up or after disconnection of connector arrangements.

In a preferred embodiment a group of the connector arrangements consists of one transmitting and at least one receiving connector arrangements having same identity. Preferably, the identity is user and/or at least partly pre-defined by means of an identification means.

Most preferably, the output from a connector arrangement connecting a transmitter device is adapted into a digital format, supported by a source port of a network transceiver in a terminal. The adaptation is done in a transmitter adaptation, which is in one side connected to an output of the transmitter and in other side to a source port of the network transceiver in the terminal. Thus, an adapted data, when inserted into the network, is captured in the Terminals in the network using an appropriate receiver connector arrangement where it is adapted back into an original format and delivered to a receiver device. Most preferably, the adapted data stream from a transmitter device is captured in the terminal and adapted back in a receiver adaptation in the receiver connecter arrangement and delivered to a receiver device.

According to a preferred embodiment signals from several devices are transmitted simultaneously through the network.

Moreover, each connector arrangement can comprise an identification set arrangement to configure receivers to corresponding transmitters.

Most preferably, a connector arrangement comprises means to receive an analogue signal, means for converting the signal to a digital signal and means to transmit the digital signal on the network. Moreover, a connector arrangement comprises means to receive a digital signal from the network, means for converting the signal to an analogue signal and means to couple the analogue signal to an analogue device. The analogue signal can be one of audio or video signals, which can be compressed and/or encoded.

The identification elements can comprise switches for setting unique identities for transmitting and receiving connector arrangements.

Moreover the connector arrangement comprises information member informing about accessibility and/or type of connection.

In preferred embodiment terminals and/or connector arrangements are identical, which reduces the costs for the network.

Preferably, a connector arrangement identifies a network capacity and characteristic before transmitting on the network.

According to one embodiment the network has one of a ring or star-topology.

The terminals can be arranged in series and/or parallel. The network can be implemented as one of MOSTnet or IEEE 1394.

The terminal and connector arrangements can be integrated, reducing the manufacturing costs.

Preferably, terminals and connector arrangements are powered through same source.

The connector arrangements can be arranged in the digital and/or analogous device and delivered from the device manufacturer directly.

The system can have wireless connection between terminals and/or connectors, e.g. WLAN, UWB (Ultra Wide Band), ZigBee etc.

To simplify controlling/monitoring (e.g. troubleshooting, updating, programming, reconfiguration etc.) the network is accessed externally, e.g. by means of PC. In one embodiment the identification elements are controlled remotely.

Moreover, the terminals and connector arrangements can be connected wirelessly, e.g. through IR, Bluetooth, etc.

The invention also relates to a connector arrangement for use in a previously mentioned network system according to claim 30.

The connector arrangement can be arranged in a digital and/or analogues device.

The invention also relates to a terminal for use in a network system mentioned previously according to claim 32. The terminal may further comprise Control Ports (CP) and source ports (SP) configured in either serial or parallel mode.

The invention also relates to a method of inter-connecting a number of receiving and transmitting digital and/or analogous devices according to claim 33. of

### BRIEF DESCRIPTION OF THE DRAWINGS

In the following, the invention is described in connection with an exemplary embodiment illustrated in the attached figures, in which:
FIG. 1 is a network constructed in accordance with an exemplary embodiment of the present invention.
FIG. 2 is a schematic depiction of access points and gateways constructed in accordance with the exemplary embodiment of the present invention.

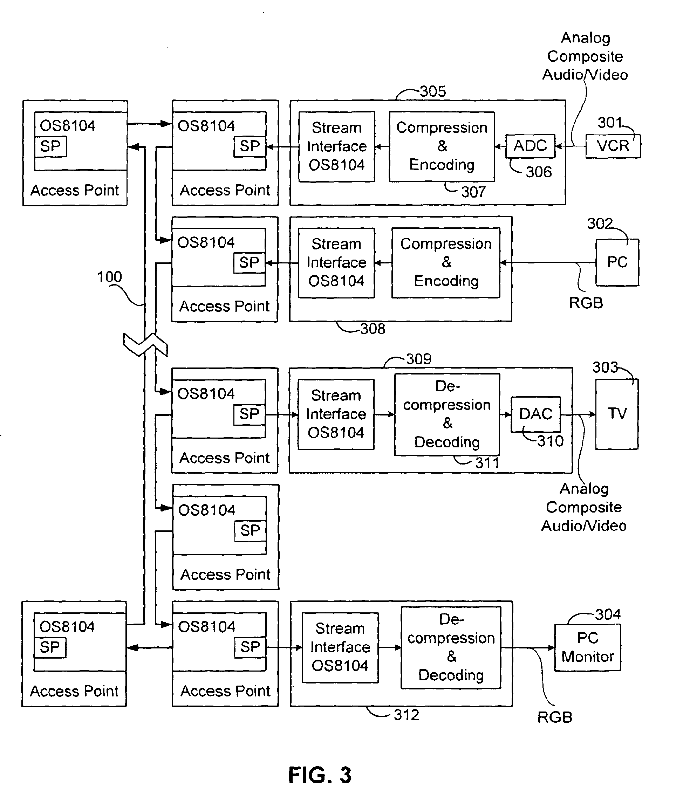

FIG. 3 is a logical block diagram showing some examples over the signal flow from a transmitter to a receiver via the exemplary embodiment of the present invention.

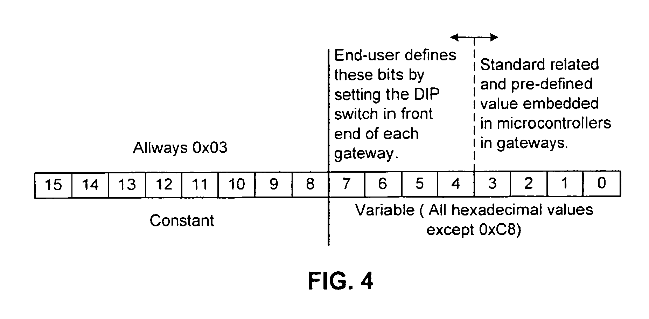

FIG. 4 is a schematic diagram showing the arrangement of group address in the transceivers used in the exemplary embodiment of the present invention.

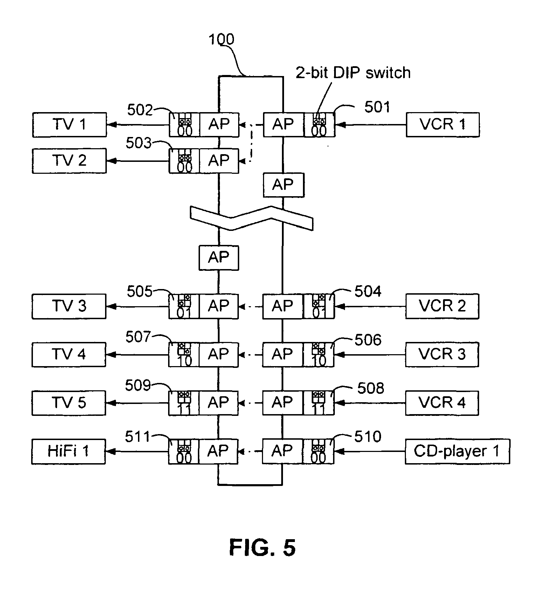

FIG. 5 shows an example where several similar transmitters (VCRs) are simultaneously transmitting to several similar receivers (TV) via the exemplary embodiment of the present invention.
FIG. 6 shows an exemplary embodiment of the front end of an access point used in the exemplary embodiment of the present invention.
FIG. 7 illustrates another embodiment of the invention.

### DETAILED DESCRIPTION OF THE PREFERRED EMBODIMENTS

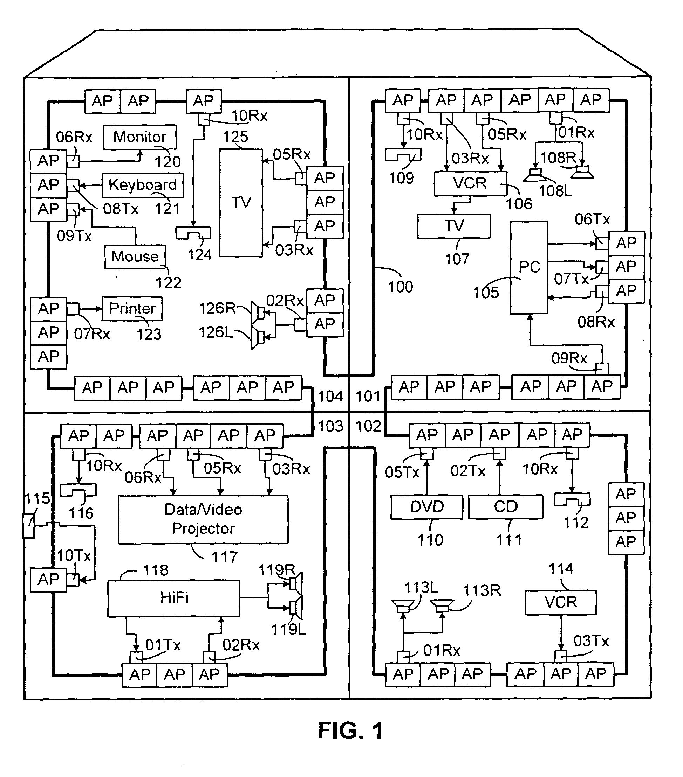

In the following, the invention is described in conjunction with an exemplary embodiment relating to a house and based on MOSTnet technology. However, it should be clear that the application site can be any space with need for a multimedia network connection and the invention can use other technologies. Multimedia network according to this invention defines a network, which can receive and transmit different types of signals in digital form over a transmission media, such as a cable, wire or radio or combination of these. FIG 1 shows a home configuration in which the present invention may be practiced. As shown in the figure, there are four rooms 101, 102, 103 and 104, each having electronic devices that are coupled to the home multimedia network 100. The network 100 comprises arbitrarily number of similar Access Points (APs), which are installed as wall sockets and connected to each other in a serial fashion. It is of course possible to use other terminal types than sockets. To access the network, each device can be coupled to any unused AP in network 100 through an application-specific gateway, e.g., 01Tx or 01Rx in FIG 1 (Tx= Transmitter, Rx= Receiver). As soon as a transmitter/receiver is connected to the network, it is detected and in case an appropriate receiver/transmitter is already connected to the network, a communication link between the devices is established.

With reference to FIG. 1 the network comprises a PC tower 105, a VCR 106, a TV-set 107, a pair of active loudspeakers 108L and 108R and a telephone 109 in a room 101, a DVD-player 110, a CD-player 111, a telephone 112, a pair of active loudspeakers 113L and 113R and a VCR 114 in another room 102, a wall outlet (phone jack) 115, a telephone 116, a data/video projector 117, and a pair of passive loudspeakers 119L and 119R which are connected to a HiFi-set 118 in a third room 103, a PC monitor 120, a PC keyboard 121, a PC mouse 122, a printer 123, a telephone 124, a TV-set 125, and a pair of active loudspeakers 126L and 126R in a fourth room 104. Of course, other devices not mentioned here but suitable for use in the network of the invention can also be connected.

In the home configuration shown in FIG. 1 the following placements and simultaneous connections are made via the network 100:
1. Placement of HiFi-set 118 in room 103 and connection of its composite audio output to composite audio inputs of the active loudspeaker-pairs 108L/R in room 101 and 113L/R in room 102. HiFi-set 118 is coupled to the network by connecting its composite audio output via a 01Tx gateway to an access point in room 118. Similarly the composite audio inputs of the active loudspeaker-pairs 108L/R and 113L/R are coupled to the network via two 01Rx gateways to two access points in rooms 101 respective 102.
2. Placement of CD-player 111 in room 102 and connection of its composite audio output to a composite audio input of HiFi-set 118 in room 103 and the active loudspeaker-pairs 126L/R in room 104. CD-player 111 is coupled to the network by connecting its composite audio output via a 02Tx gateway to an access point in room 102. Similarly a composite audio input of HiFi-set 118 and the active loudspeaker-pairs 126L/R are connected via two 02Rx gateways to two access points in room 103 respective room 104.
3. Placement of VCR 114 in room 102 and connection of its composite video and audio outputs to composite video and audio inputs of VCR 106 in room 101, TV-set 125 in room 104 and data/video projector 117 in room 103. VCR 114 is coupled to the network by connecting its composite video and audio outputs via a gateway 03Tx to an access point in room 102. Composite video and audio inputs of VCR 106 are connected via a 03Rx gateway to an access point in room 101. Composite video and audio inputs of TV-set 125 are connected via a 03Rx gateway to an access point in room 104. Composite video and audio inputs of data/video projector 117 are connected via a 03Rx gateway to two access points in room 103.
4. Placement of DVD-player 110 in room 102 and connection of its S-video output to the S-video inputs of VCR 106 in room 101, TV-set 125 in room 104 and data/video projector 117 in room 103. DVD-player 110 is coupled to the network by connecting its S-video output via a 05Tx gateway to an access point in room 102. The S-video input of TV-set 125 is connected via a 05Rx gateway to an access point in room 104. The S-video input of the data/video projector 117 is connected via a 05Rx gateway to an access point in room 103.
5. Placement of PC tower 105 in room 101 and connection of its RGB output to the RGB inputs of PC monitor 120 in room 104 and data/video projector 117 in room 103. Further one of USB outputs of PC tower 105 is connected to USB input of printer 123 in room 104. The RGB output of PC tower 105 is connected via a 06Tx gateway to an access point in room 101. One of USB outputs of PC tower 105 is connected via a 07Tx gateway to an access point in room 101. The RGB inputs of monitor 120 and data/video projector 117 are connected via two 06Rx gateways to two access points in rooms 104 respective 103.
6. Placement of PC keyboard 121 in room 104 and connection of its output to the keyboard input of the PC tower 105 in room 101. The output of keyboard 121 is connected via a 08Tx to an access point in room 104. The keyboard input of PC tower 105 is connected via a 08Rx gateway to an access point in room 101.
7. Placement of PC mouse 122 in room 104 and connection of its output to the mouse input of the PC tower 105 in room 101. The output of mouse 122 is connected via a 09Tx gateway to an access point in room 104. The mouse input of PC tower 105 is connected via a 09Rx gateway to an access point in room 101.
8. Connection of the phone jack 115 in room 103 to telephones 109 in room 101, 112 in room 102, 116 in room 103 and 124 in room 104. Phone jack 115 is connected via a 10Tx gateway to an access point in room 103. Telephones 109, 112, 116 and 124 are connected via four 10Rx gateways to four access points in rooms 101, 102, 103 respective 104.

The network 100 in FIG 1 includes arbitrarily number of identical or very similar access points (AP). These access points, which might be installed as wall sockets, are connected to each other in a serial fashion as mentioned above. To access the network, each device can be connected to any unused access point in the network through a specific gateway. All gateways in FIG 1 have two interfaces: an identical interface to any access point in the network and an application-specific interface. Some examples on applications are different standards of composite audio, different standards of composite video (e.g. PAL B, PAL D, NTSC), S-video, RGB, USB, Ethernet, etc. Additionally, gateways in FIG 1 may be divided into two categories: transmitters (Tx) and receivers (Rx). A Tx gateway is used for connection of a transmitter, e.g. VCR 114 in FIG 1, to the network. An Rx gateway in the other hand is used for connection of a receiver, e.g. TV 125 in FIG 1, to the network. To connect a transmitter to one or more receivers, e.g. a PAL B VCR to several PAL B TV-sets, one Tx gateway (e.g. PAL B Tx gateway) and one or several Rx gateways of the same kind (e.g. PAL B Rx gateways) are used. This means that each transmitter in the network presented in FIG 1 can be connected to as many receivers as the number of the currently unused access points in the network allows. As it can be seen in the figure, there are no specific (central) control units included in the present invention. The control logic is instead distributed into all access points and coupled gateways. This is one of the unique characteristics in the present invention, which make it less complex and more cost effective to the average consumer.

The present may be implemented using any open standard within digital networks, e.g. Ethernet, MOSTnet, WLAN or IEEE1394. However, in a preferred implementation, as described in this application, the open standard MOSTnet is used (as described earlier). shows an exemplary implementation of the access points and gateways in the present invention based on MOSTnet. The network transceiver 213 in each access point may be implemented using the commercially available chip, MOST network transceiver OS8104, manufactured by OASIS SilliconSystems. The core network management functions in a MOST network are handled automatically, on a distributed basis, and are embedded into the OS8104 MOST transceiver itself. Since channel allocation, physical addressing, fault monitoring and power-down/wake-up are provided on-chip, the implementation of the network is very simple and a high level of network protection and reliability is achieved. Remote access allows for network management functions, such as network diagnostics, to be handled in a decentralized manner within each node.

Thus, the network 100 comprises arbitrarily numbers of access points, whereas access points 201, 202, 203, 204, 205 and 206 are shown in . As shown in the figure, the transceivers in all access points are connected to each other in a serial fashion and build up the network 100, which is the multimedia and control network based on ring topology, where all relevant network management functions such as bandwidth allocation and de-allocation are handled internally in a distributed manner. The Control Ports (CP) of transceivers in network 100 might be configured in either serial or parallel mode; in the present invention however in this exemplary implementation the control port of all transceivers in network 100 are configured in serial mode (I2C). The source ports (SP) of the transceivers might also be configured in either serial or parallel mode. However, to minimize the number of interfacing signals between an access point and a gateway a serial mode is preferred. Beside the network transceiver 213, each access point in network 100 comprises a micro-controller 214, which is connected to the control port of the transceiver 213 via I2C bus 216. The micro-controller also controls a user-indicator 215, which is placed on front end of each access point and is used for indication of network and connection status to the user. The user-indicator 215 might be implemented using a simple light bar, LEDs or a display.

As shown in , the transmitter 210 is coupled via Tx gateway 207 to access point 201 and via network 100 broadcasts digital or analog signals to receivers 211 and 212, which are coupled to access points 202 respective 203 via two Rx gateways 208. Before being inserted to the network, the output from transmitter 210 needs to be adapted into a digital format, which is supported by the source port of the network transceiver 213 in access point 201. As shown in the figure this adaptation is done in TX adaptation 217, which is in one side connected to the output of the transmitter and in other side to the source port of the network transceiver in the access point. When inserted into the network this adapted data might be captured in any access point in network 100 using an appropriate Rx gateway where it is adapted back into the original format and delivered to the receiver. In the figure, the adapted data stream from transmitter 210 is captured in access points 202 and 203 where it is adapted back in Rx adaptation 220 in Rx gateways 208 and delivered to receivers 211 respective 212. Tx and Rx adaptation in the gateways are exemplified in , which shows a logical block diagram where VCR 301 and PC (graphic card) 302 are simultaneously transmitting analog composite video/audio and digital RGB data to TV 303 and PC monitor 304, respectively, via the network 100. As shown in the figure, the analog composite video/audio signals coming from VCR 301 are first converted into a digital format in ADC 306 in Tx gateway 305 and then compressed and encoded (in 307) using e.g. MPEG2 algorithm, to reduce the required bandwidth. In the receiving side, Rx gateway 309 captures this compressed video/audio data from network 100 and de-compresses and decodes (311) it into composite video/audio data, which is then converted into analog composite video/audio in DAC 310 and delivered to TV 303. Since the output from the graphic card 302 is already digital, no analog/digital conversion step is necessary in TX gateway 305. To reduce the required bandwidth, the RGB data is however compressed and encoded (308), using e.g. JPEG algorithm, before insertion into the network. In the receiving side, Rx gateway 312 captures this compressed graphic data from network 100 and de-compresses and decodes it back into RGB data and delivers it to PC monitor 304.

Beside the adaptation part, each gateway in , whether Tx or RX, comprises a micro-controller and a DIP-switch. When coupled to an access point, the micro-controller in each gateway is provided access to the transceiver in the access point via bus 216. Preferably, the DIP-switch 219 in Tx gateway and DIP-switches 222 in RX gateways 208 are placed on the front end of each gateway and can be configured by the user. Tx gateway 207 and Rx gateways 208 build up a gateway group. For each data stream set up through network 100 a gateway group, which consist of one Tx gateway and one or several similar Rx gateways, is needed. All DIP-switches in a gateway group must be configured equally hence outputting the same bit pattern to micro-controllers in gateways where they are combined with a pre-defined bit pattern to generate a unique group address for the gateway group. This group address is used for setup of data stream via the network 100 from a coupled Tx gateway to all coupled Rx gateways, which belong to the same gateway group as the Tx gateway. The pre-defined part in the group address is a constant value embedded in the applications running in the micro-controllers in both Tx and Rx gateways in the gateway group and is related to their related standard such as composite video PAL B or USB and is a unique pattern for each supported standard. As mentioned above the MOST network transceiver chip, OS8104 might be used to implement transceiver 213 in access points. OS8104 supports 255 group addresses, which means that theoretically 255 transmitters can be coupled simultaneously to the network 100. The arrangement of the supported 16-bit group addresses in OS8104 is shown in . As shown in the figure, the 8-bit variable part in the group address may be portioned as appropriate into user-define and pre-defined parts. However, it is recommended to keep the width of the user-define pattern as low as possible as the higher width will make the usage of the present invention more complex to the typical user. Allowing the user to partly define the group address makes it possible to connect several transmitters and receivers of the same character, e.g. several VCRs and TVs, simultaneously to the network 100 and group them as desired. The maximum number of coupled similar transmitters depends on the width of the DIP-switches in gateways. This is exemplified in, where VCR 1, VCR 2, VCR 3, VCR 4 and CD-player 1 are simultaneously transmitting composite audio/video signals of same standard, e.g. PAL B, corresponding composite audio via network 100 to TV 1 and TV 2, TV 3, TV 4, TV 5 and HiFi 1, respectively. In this example, all gateways are implemented using 2-bit DIP-switches hence a maximum of 4 similar transmitters might simultaneously use network 100 for data transmission.

Five gateway groups can be identified as in :
1. Tx gateway 501 and Rx gateways 502 and 503 (Composite audio/video)
2. Tx gateway 504 and Rx gateway 505 (Composite audio/video)
3. Tx gateway 506 and Rx gateway 507 (Composite audio/video)
4. Tx gateway 508 and Rx gateway 509 (Composite audio/video)
5. Tx gateway 510 and Rx gateway 511 (Composite audio).

Tx gateways 501, 504, 506 and 508 are all similar and the only difference between them is the value of their DIP-switches. Also Rx gateways 502, 503, 505, 507 and 509 in are similar. As it can be seen in the figure, several similar coupled Rx gateways such as Rx gateways 502 and 503 might have the same DIP-switch value. This is however not valid when it comes to similar TX gateways. Two similar TX gateways, which are simultaneously are coupled to network 100, shall not have equal DIP-switch values.

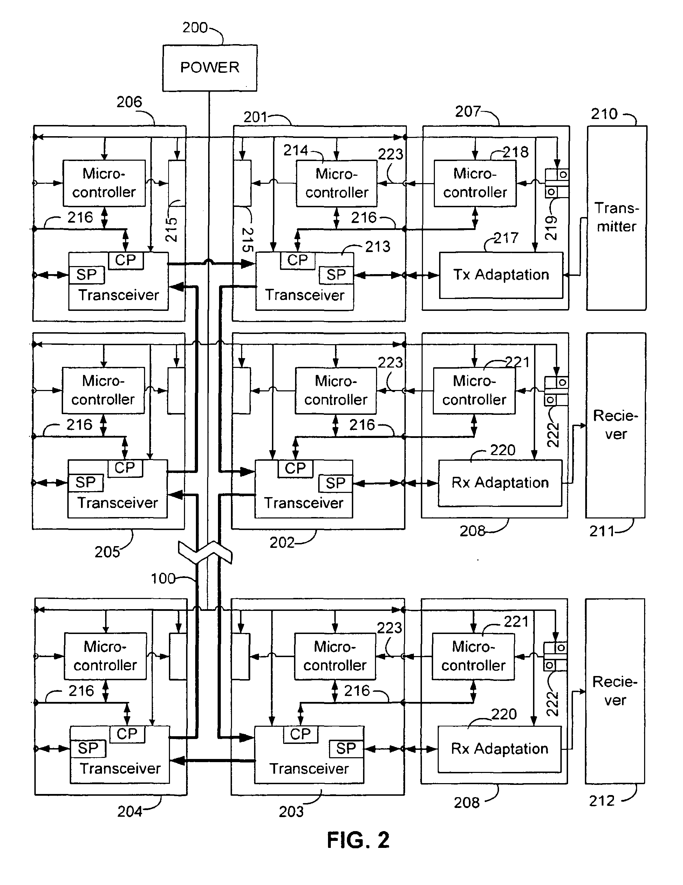

Referring back to , three states might be identified for each access points in network 100 depending on how transceiver 213 is configured:
*1. Default state.*
   In this state no gateway is connected to the access point. The access point enters into this state when transceiver 213 is initialized by micro-controller 214 either at power-up or when a gateway is disconnected from the access point. During this state transceiver 213 is accessed either remotely by network 100 or locally by micro-controller 214. Network 100 continuously updates transceiver 213 with the current network status and micro-controller 214 periodically reads the network status, such as available bandwidth, from transceiver 213 and indicates it to the user by configuring user-indicator 215. Access points 204, 205 and 206 in are in the default state.
*2. Receiving state.*
   In this state an Rx gateway is coupled to the access point. Access points 202 and 203 in are in the receiving mode. They were entered into this mode when Rx gateways 208 were coupled to them. During this state, the transceiver 213 in the receiving access point is accessed either remotely by network 100 or locally either by micro-controller 214 in the access point or by micro-controller 221 in the coupled Rx gateway. The micro-controller 221 in the coupled Rx gateway asserts the interrupt signal 223 to micro-controller 214 in the access point when it requires access to transceiver 213. Initially micro-controller 221 in the coupled Rx gateway configures related parts in transceiver 213 such as source data ports as appropriate and assigns the group address of the gateway group to it. If the user reconfigures DIP-switch 222 on the RX gateway while it is coupled to the receiving access point, the group address in transceiver 213 in the access point is also updated by micro-controller 221 in the RX gateway. While micro-controller 221 in the RX gateway does not require access to transceiver 213, micro-controller 214 in the receiving access point periodically reads the network and connection status from transceiver 213 and indicates it to the user by configuring user-indicator 215.
*3. Transmitting state.*
   In this state a Tx gateway is coupled to the access point. Access point 201 in Fig. 2 is in the transmitting state. The access point enters into this state when a Tx gateway is coupled to it. During this state transceiver 213 in the transmitting access point is accessed either remotely by the network 100 or locally either by the micro-controller 214 in the access point or by micro-controller 218 in the Tx gateway. The micro-controller 218 in the Tx gateway asserts the interrupt signal 223 to micro-controller 214 in the access point when it requires access to the transceiver 213. Initially the micro-controller 218 configures related parts in the transceiver 213 such as source data ports as appropriate. The micro-controller 218 in the Tx gateway then configures the transceiver 213 to send an allocation request of a number of network channels, which are required for transport of the adapted source data from the transmitter in the network. This step is repeated until either the network 100 allocates the requested channels for the transmitter or the user disconnects the Tx gateway from the access point. If network 100 grants the requested channel allocation, the adapted source data from the transmitter is dropped into the allocated channels in the network 100 by the transceiver 213 and is available in any unused access point in the network. Micro-controller 218 in the Tx gateway then periodically (e.g. each 1 second) configures the transceiver 213 to group cast similar control messages. These control messages are addressed to transceivers 213 in all access points in the network 100 to which an Rx gateway belonging to the same gateway group as the Tx gateway is coupled. These destination transceivers all have the group address of the gateway group and are configured by the control messages to drop out data from the allocated channels in the previous step. During the transmitting state when micro-controller 218 in the Tx gateway does not require access to the transceiver 213, the micro-controller 214 in the access point takes over and periodically reads the network and connection status from the transceiver 213 and indicates it to the user by configuring the user-indicator 215.

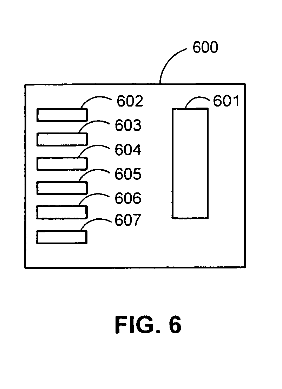

As shown in Fig. 6, the power unit 200 supplies all the access points in the entire network with power. It also powers up all the gateways that are coupled to any access point in network 100.

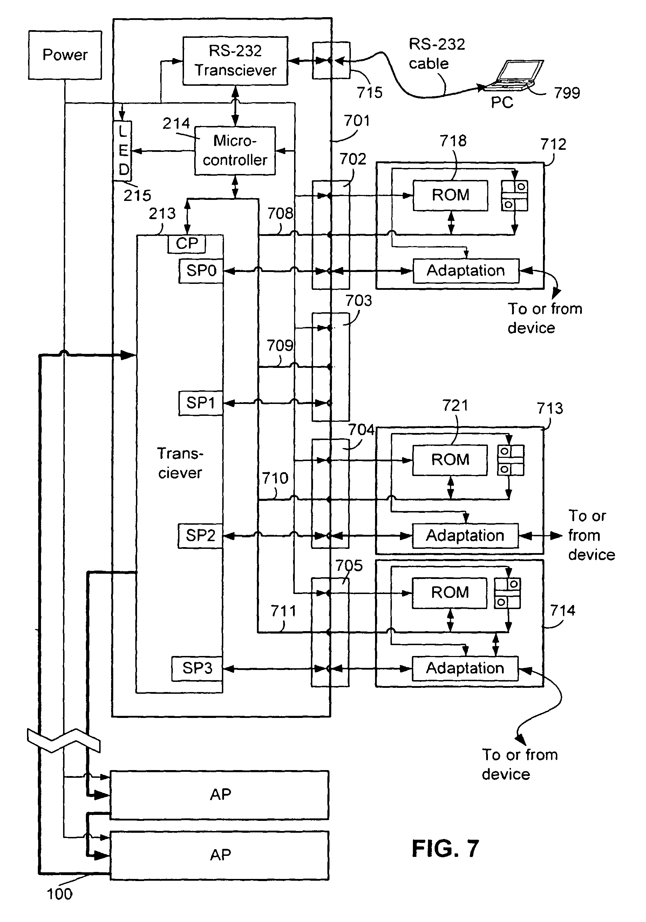

FIG. 7 shows yet another exemplary embodiment of the present invention, an alternative to the one illustrated in FIG. 2, which is once again based on MOSTnet. In this embodiment, the micro-controller 218/221 in a gateway is substituted with a storage/memory unit 718/721 (e.g. ROM: Read Only Memory, RAM: Read Access Memory, EEPROM: Electrical Erasable Programmable ROM, etc.), which contains necessary application-specific data and/or instructions such as required bandwidth, gateway group address, and information regarding whether the gateway is a transmitting gateway or a receiving one. The micro-controller 214 in the access points can access these memory units and reads data via corresponding control busses 708, 709, 710 or 711, as soon as a gateway 712, 713 or 714 is connected to a gateway connector 702, 703, 704 or 705 on the access point and does all the necessary tasks including the tasks of the replaced micro-controllers in the gateways as described earlier. When a memory is used instead of a micro-controller in the gateways, one way to detect the connection or disconnection of a gateway to an access point is when the micro controller 214 in the access point reads a pre-defined address in the memory 718/721 in the gateway periodically. A failed read from the pre-defined address in the memory 718/721 in the gateway will be translated in the access point as if no gateway is connected to the access point or -the gateway is disconnected from the access point if previously connected. A successful read from the pre-defined address in the memory unit in the gateway will be interpreted as if a gateway is connected to the access point or it is still connected if previously connected.

In the exemplary embodiment of Fig. 2, if OS8104 is used, only one out of four serial source ports in a transceiver 213 are used, which resulted in an access point with only one gateway connector in its front end. It is of course possible to use 2, 3 or all 4 serial source ports available in OS8104, resulting in access points each with 2, 3 or 4 independent general-purpose gateway connectors. In FIG. 7, access point 701 has four gateway connectors 702, 703, 704 and 705. The micro-controller 214 in the access point 701 monitors periodically all its gateway connectors via control buses 708, 709, 710 and 711 to check whether a Tx (transmit) or Rx (receive) gateway is connected to or disconnected from its gateway connectors and if so it does all the necessary tasks mentioned earlier. When having more than one gateway connector, the access point could be at the same time both in transmitting and receiving states because while a transmitter might be connected to a gateway connector on an access point, a receiver might be connected to another gateway connector on the same access point.

It is also possible that one or several access points can have one or several additional standard ports (RS-232, USB, Ethernet, Infrared, Bluetooth, WLAN), which render possible that a device e.g. a computer 799 can communicate directly or via Internet with the access points for the purpose of external network control, diagnostics or services. These ports might even be used to update the firmware running in the micro-controllers in the access points or gateways. As shown in FIG. 7, access point 701 has a serial (e.g. RS-232) interface 715, which can be used for communication with the micro-controller 214 and thereof communicate with all other units that are coupled to the micro-controller 214, such as transceiver 213, memories 718/721 in the connected gateways, and in gateway 714 even with the adaptation part in the gateway. As mentioned earlier, this port may also be used for updating the firmware of the micro-controller 214 in the access point 701.

The externally arranged PC 799 comprises a program for monitoring and controlling the devices connected to the network. The program may further comprises instructions for updating firmware in the access points and gateways, setting DIP-switches (also controllable remotely by remote-controllers) or identification devices, programming storage devices and also controlling/programming connected devices, e.g. programming a recording device.

Fig. 6 shows an exemplary embodiment of the front end used in all access points in the network 100. The front end of the access point 600 according to this embodiment, comprises:
- At least one general purpose gateway connector 601,
- An indicator 602 used for indication of available unused bandwidth in the network,
- An indicator 603 used for indication of bandwidth allocation in process when a transmitter is connected to the network,
- An indicator 604 used for indication of success in bandwidth allocation when a transmitter is connected to the network,
- An indicator 605 used for indication of absence of appropriate transmitter when a receiver is connected to the network,
- An indicator 606 used for indication of failure in bandwidth allocation when a transmitter is connected to the network,
- An indicator 607 used for indication of other failures, e.g. system error.

As mentioned above the system has distributed control logic. The control logic can be implemented in both AP and GW and provide different functionality. The control logic amongst others handles (implemented in one or all APs):
- Bandwidth allocation request,
- Group connection setup,
- Group address setting,
- Network and connection status indication, and
- Terminal initiation.

If the control logic is provided in both GW and AP, in a Tx GW, it handles bandwidth allocation request and connection setting, while in the Rx GW it handles group address settings. Thus, the AP handles network status and connection status indication and initiation when disconnected.

If the control logic is provided mostly in GW, in a Tx GW, it handles bandwidth allocation request and connection setting, while in the Rx GW it handles group address settings. In both Rx and Tx GW, network status and connection status indication are handled, and in all APs handle initiation when disconnected.

The invention is not limited to the shown embodiments but can be varied in a number of ways without departing from the scope of the appended claims and the arrangement and the method can be implemented in various ways depending on application, functional units, needs and requirements etc. In one embodiment for example, the gateway and the access point can be implemented as one unit. It is possible to use at least partly wireless network and/or encrypt some of signals.

## Claims

1. A multimedia network system for inter-connecting a number of receiving and transmitting digital and/or analogous devices (105-107, 108R, 108L, 109-112, 113L, 113R, 114-118, 119L, 119R, 120-125, 126R, 126L, 210-212), the network system comprising:
a number of receiving and/or transmitting terminals (AP, 201-206) connected to each other to form a transmission media network (100) and to be connected to said digital and/or analogous devices; and
application specific connector arrangements (GW, 207, 208, 1-10 Tx, 1-10 Rx) for connecting said digital and/or analogous devices to said terminals; wherein
at least one of said connector arrangements is arranged to transmit (1-10 Tx) and/or receive (1-10 Rx) data,
**characterized in**
**that** at least one of said terminals is arranged to transmit and/or receive data, that said at least one connector arrangement comprises data at least about identification, said identification being useable to setup a data stream between different connector arrangements using said transmission media network (100); and
**that** each of said terminals is capable of both transmitting to and receiving from said connector arrangements at least one of audio and video traffic.

2. The network system of claim 1, wherein said connector arrangements are connected to said terminals through identical interfaces.

3. The network system of claim 1, wherein at least one of said terminals and connector arrangements further comprises a control logic for controlling said transmission and/or reception of data, said control logic handling one or several of:
- bandwidth allocation request,
- group connection set-up,
- group address setting,
- network status indication,
- connection status indication, and
- terminal initiation.

4. The network system of claim 3, wherein said control logic is provided in at least one connector arrangement being a transmitting connector, for handling one or several of:
- bandwidth allocation request,
- group connection set-up,
- network status indication, and
- connection status indication.

5. The network system of claim 3, wherein said control logic is provided in a least one connector arrangement being a receiving connector, for handling at least one of:
- group address setting,
- network status indication, and
- connection status indication.

6. The network system of claim 4, wherein said control logic is further provided in at least one terminal for handling at least one of:
- network status indication,
- connection status indication, and
- terminal initiation at power-up or after disconnection of connector arrangements.

7. The network system of claim 1, wherein a group of said connector arrangements consists of one transmitting and at least one receiving connector arrangements having same identification.

8. The network system of claim 7, wherein said identification is user and/or at least partly pre-defined by means of an identification means (219, 222).

9. The network system of claim 1, wherein at least one of the number of receiving and transmitting devices is a transmitter device (210), and wherein the output from the transmitter device (210), to be transmitted as data by a transmitting terminal on said transmission media network, is transformed into a digital format supported by the transmission media network (100).

10. The network system of claim 9, wherein the transformation is done in a transmitter adaptation (217) in one of the connector arrangements, which is in one side connected to an output of the transmitter device and on another side to an input of the transmitting terminal.

11. The network system of claim 10, wherein at least one of the number of receiving and transmitting devices is a receiver device (211), and wherein a receiving terminal for receiving the transformed data from the network is connected to said receiver device, and comprises a receiver connector arrangement (208) for transforming said data back to a format to be delivered to the receiver device.

12. The network system of claim 11, wherein the transformed data stream from the a transmitter device (210) is captured in the terminal (202, 203) and transformed back in an receiver adaptation (220) in the receiver connector arrangement (208) and delivered to one of the number of receiving and transmitting devices being a receiver device (211, 212).

13. The network system of claim 1, wherein signals from several of the number of receiving and transmitting devices are transmitted simultaneously through the network.

14. The network system of claim 1, wherein each connector arrangement comprises an identification set arrangement to configure the receiving and transmitting devices being receivers to corresponding transmitters.

15. The network system of claim 1, wherein a connector arrangement comprises means to receive an analogue signal, means for converting said signal to a digital signal and means to transmit said digital signal on said network through one of said terminals.

16. The network system of claim 1, wherein a connector arrangement comprises means to receive an digital signal from said network, through one of said terminals, means for converting said signal to an analogue signal and means to couple said analogue signal to one of the number of receiving and transmitting devices being an analogue device.

17. The network system of claim 15, wherein said analogue signal is one of audio or video signals, which can be compressed and/or encoded.

18. The network system of claim 9, wherein said connector arrangements comprise identification elements comprising switches for setting unique identities for transmitting and receiving connector arrangements.

19. The network system of claim 1, all of said terminals are identical, and/or all of all of said connector arrangements are identical.

20. The network system of claim 1, wherein said network has one of a ring or star-topology.

21. The network system of claim 1, wherein said terminals connected to each other in series and/or parallel to form said transmission media network.

22. The network system of claim 1, wherein said network is implemented as one of MOSTnet or IEEE 1394.

23. The network system of claim 1, wherein said terminal and connector arrangement are integrated.

24. The network system of claim 1, wherein said terminals and connector arrangements are powered through same source.

25. The network system of claim 1, wherein at least one of the connector arrangements is arranged in said digital and/or analogous device.

26. The network system of claim 1, wherein the system comprises wireless connection between at least one of said connector arrangements and terminals and between terminals.

27. The network system of claim 1, wherein the network is externally accessible.

28. The network system according to claim 18, wherein said identification element is controlled remotely.

29. The network system of claim 1, wherein said terminals and connector arrangements are connected wirelessly.

30. A connector arrangement for use in a network system according to any one of the claims 1-29 comprising:
connectors for connecting to said devices;
connecting means for connecting to the terminals;
at least one of a receiver adaptation (220) and a transmitter adaptation (217), for transforming data between a data format of said devices and a data format of said transmission media network; and
identification means providing data about identification, said identification being useable to setup a data stream between different connector arrangements within said transmission media network (100).

31. The connector arrangement of claim 30, wherein the connector arrangement is arranged in the digital and/or analogous device to be connected to a terminal through said connector arrangement.

32. A terminal for use in a network system according to any one of the claims 1-29 comprising a transceiver (213) to communicate with other terminals on a transmission media network, and a controller (214) to control said transceiver (213).

33. A method of inter-connecting a number of receiving and transmitting digital and/or analogous devices (105-107, 108R, 108L, 109-112, 113L, 113R, 114-118, 119L, 119R, 120-125, 126L, 126R, 210-212), the method comprising the steps of:
providing a number of receiving and/or transmitting terminals (AP, 201-206) and connecting said terminals to each other to form a transmission media network (100), wherein at least one of said terminals is arranged to transmit (1-10 Tx) and/or receive (1-10 Rx) data,;
connecting application specific connector arrangements (GW, 207, 208, 1-10 Tx, 1-10 Rx) to said terminals, wherein at least one of said connector arrangements is arranged to transmit and/or receive data;
connecting said digital and/or analogous devices to said application specific connector arrangements (GW, 207, 208, 1-10 Tx, 1-10 Rx); wherein at least one connector arrangement comprises data at least about identification, said identification being useable to setup a data stream between different connector arrangements within said transmission media network (100);, and
wherein each of said terminals are capable of both transmitting to and receiving from said connector arrangements at least one of audio and video.

## Patentansprüche

1. Multimedianetzwerksystem zum Verbinden einer Anzahl digitaler und/oder analoger Empfangs- und Sendegeräte (105-107, 108R, 108L, 109-112, 113L, 113R, 114-118, 119L, 119R, 120-125, 126R, 126L, 210-212), wobei das Netzwerksystem Folgendes umfasst:
eine Anzahl von Empfangs- und/oder Sende-Endgeräten (AP, 201-206), die miteinander verbunden sind, um ein Übertragungsmediennetzwerk (100) zu bilden, und die mit den digitalen und/oder analogen Geräten verbunden sind; und
anwendungsspezifische Verbinderanordnungen (GW, 207, 208, 1-10 Tx, 1-10 Rx) zum Verbinden der digitalen und/oder analogen Geräte mit den Endgeräten; wobei
mindestens eine der Verbinderanordnungen dafür ausgelegt ist, Daten zu senden (1-10 Tx) und/oder zu empfangen (1-10 Rx),
**dadurch gekennzeichnet,**
**dass** mindestens eines der Endgeräte dafür ausgelegt ist, Daten zu senden und/oder zu empfangen,
**dass** die mindestens eine Verbinderanordnung Daten mindestens über Identifizierung umfasst, wobei die Identifizierung dafür verwendet werden kann, einen Datenstrom zwischen verschiedenen Verbinderanordnungen unter Verwendung des Übertragungsmediennetzwerks (100) einzurichten; und
**dass** jedes der Endgeräte in der Lage ist, einen Audio- und/oder einen Videodatenverkehr sowohl an die Verbinderanordnungen zu senden als auch von den Verbinderanordnungen zu empfangen.

2. Netzwerksystem nach Anspruch 1, wobei die Verbinderanordnungen über identische Schnittstellen mit den Endgeräten verbunden sind.

3. Netzwerksystem nach Anspruch 1, wobei mindestens eines der Endgeräte und Verbinderanordnungen des Weiteren eine Steuerlogik zum Steuern des Sendens und/oder Empfangens von Daten umfasst, wobei die Steuerlogik eines oder mehrere des Folgenden handhabt:
- Bandbreitenzuteilungsanforderung,
- Gruppenverbindungseinrichtung,
- Gruppenadresseinstellung,
- Netzwerkstatusanzeige,
- Verbindungsstatusanzeige, und
- Endgerätinitiiierung.

4. Netzwerksystem nach Anspruch 3, wobei die Steuerlogik in mindestens einer Verbinderanordnung, die ein Sendeverbinder ist, angeordnet ist, um eines oder mehrere des Folgenden zu handhaben:
- Bandbreitenzuteilungsanforderung,
- Gruppenverbindungseinrichtung,
- Netzwerkstatusanzeige, und
- Verbindungsstatusanzeige,

5. Netzwerksystem nach Anspruch 3, wobei die Steuerlogik in mindestens einer Verbinderanordnung, die ein Empfangsverbinder ist, angeordnet ist, um mindestens eines von Folgendem zu handhaben:
- Gruppenadresseinstellung,
- Netzwerkstatusanzeige, und
- Verbindungsstatusanzeige.

6. Netzwerksystem nach Anspruch 4, wobei die Steuerlogik des Weiteren in mindestens einem Endgerät angeordnet ist, um mindestens eines von Folgendem zu handhaben:
- Netzwerkstatusanzeige,
- Verbindungsstatusanzeige, und
- Endgerätinitiiierung beim Einschalten oder nach dem Trennen von Verbinderanordnungen.

7. Netzwerksystem nach Anspruch 1, wobei eine Gruppe der Verbinderanordnungen aus einer Sendeverbinderanordnung und mindestens einer Empfangsverbinderanordnung besteht, die die gleiche Identifizierung haben.

8. Netzwerksystem nach Anspruch 7, wobei die Identifizierung mittels eines Identifizierungsmittels (219, 222) benutzerdefiniert und/oder mindestens teilweise vordefiniert ist.

9. Netzwerksystem nach Anspruch 1, wobei mindestens eines der Anzahl von Empfangs- und Sendegeräten ein Sendegerät (210) ist, und wobei das Ausgangssignal des Sendegerätes (210), das in Form von Daten durch ein Sende-Endgerät in dem Übertragungsmediennetzwerk zu übertragen ist, in ein digitales Format umgewandelt wird, das von dem Übertragungsmediennetzwerk (100) unterstützt wird.

10. Netzwerksystem nach Anspruch 9, wobei die Umwandlung in einer Senderanpassung (217) in einer der Verbinderanordnungen ausgeführt wird, die auf einer Seite mit einem Ausgang des Sendegerätes verbunden ist und auf einer anderen Seite mit einem Eingang des Sende-Endgerätes verbunden ist.

11. Netzwerksystem nach Anspruch 10, wobei mindestens eines der Anzahl von Empfangs- und Sendegeräten ein Empfangsgerät (211) ist, und wobei ein Empfangs-Endgerät **zum** Empfangen der umgewandelten Daten aus dem Netzwerk mit dem Empfangsgerät verbunden ist und eine Empfangsverbinderanordnung (208) umfasst, um die Daten in ein Format zurückzuverwandeln, in dem sie an das Empfangsgerät übermittelt werden.

12. Netzwerksystem nach Anspruch 11, wobei der umgewandelte Datenstrom aus dem Sendegerät (210) in dem Endgerät (202, 203) erfasst wird und in einer Empfängeranpassung (220) in der Empfangsverbinderanordnung (208) zurückverwandelt wird und an eines der Anzahl von Empfangs- und Sendegeräten, das ein Empfangsgerät (211, 212) ist, übermittelt wird.

13. Netzwerksystem nach Anspruch 1, wobei Signale von verschiedenen der Anzahl von Empfangs- und Sendegeräten gleichzeitig über das Netzwerk übertragen werden.

14. Netzwerksystem nach Anspruch 1, wobei jede Verbinderanordnung eine Identifizierungssatzanordnung umfasst, um die Empfangs- und Sendegeräte, die Empfänger sind, zu entsprechenden Sendern zu konfigurieren.

15. Netzwerksystem nach Anspruch 1, wobei eine Verbinderanordnung Folgendes umfasst: Mittel zum Empfangen eines analogen Signals, Mittel zum Umwandeln des Signals in ein digitales Signal und Mittel zum Senden des digitalen Signals in dem Netzwerk über eines der Endgeräte.

16. Netzwerksystem nach Anspruch 1, wobei eine Verbinderanordnung Folgendes umfasst: Mittel zum Empfangen eines digitalen Signals aus dem Netzwerk über eines der Endgeräte, Mittel zum Umwandeln des Signals in ein analoges Signal und Mittel zum Koppeln des analogen Signals in eines der Anzahl von Empfangs- und Sendegeräten, das ein analoges Gerät ist.

17. Netzwerksystem nach Anspruch 15, wobei das analoge Signal ein Audio- oder ein Videosignal ist, das komprimiert und/oder codiert werden kann.

18. Netzwerksystem nach Anspruch 9, wobei die Verbinderanordnungen Identifizierungselemente umfassen, die Schalter zum Einstellen eindeutiger Identitäten für Sende- und Empfangsverbinderanordnungen umfassen.

19. Netzwerksystem nach Anspruch 1, wobei alle Endgeräte identisch sind und/oder alle Verbinderanordnungen identisch sind.

20. Netzwerksystem nach Anspruch 1, wobei das Netzwerk eine Ring- oder Sterntopologie hat.

21. Netzwerksystem nach Anspruch 1, wobei die Endgeräte in Reihe und/oder parallel miteinander verbunden sind, um das Übertragungsmediennetzwerk zu bilden.

22. Netzwerksystem nach Anspruch 1, wobei das Netzwerk als MOSTnet oder IEEE 1394 implementiert ist.

23. Netzwerksystem nach Anspruch 1, wobei das Endgerät und die Verbinderanordnung integriert sind.

24. Netzwerksystem nach Anspruch 1, wobei die Endgeräte und Verbinderanordnungen aus derselben Stromquelle versorgt werden.

25. Netzwerksystem nach Anspruch 1, wobei mindestens eine der Verbinderanordnungen in dem digitalen und/oder analogen Gerät angeordnet ist.

26. Netzwerksystem nach Anspruch 1, wobei das System eine drahtlose Verbindung zwischen mindestens einem der Verbinderanordnungen und Endgeräte und zwischen Endgeräten umfasst.

27. Netzwerksystem nach Anspruch 1, wobei auf das Netzwerk von außen zugegriffen werden kann.

28. Netzwerksystem nach Anspruch 18, wobei das Identifizierungselement ferngesteuert wird.

29. Netzwerksystem nach Anspruch 1, wobei die Endgeräte und Verbinderanordnungen drahtlos verbunden sind.

30. Verbinderanordnung zur Verwendung in einem Netzwerksystem nach einem der Ansprüche 1-29, die Folgendes umfasst:
Verbinder zum Verbinden mit den Geräten;
Verbindungsmittel zum Verbinden mit den Endgeräten;
eine Empfängeranpassung (220) und/oder eine Senderanpassung (217) zum Umwandeln von Daten zwischen einem Datenformat der Geräte und einem Datenformat des Übertragungsmediennetzwerks; und
ein Identifizierungsmittel, das Daten über Identifizierung bereitstellt, wobei die Identifizierung dafür verwendet werden kann, einen Datenstrom zwischen verschiedenen Verbinderanordnungen innerhalb des Übertragungsmediennetzwerks (100) einzurichten.

31. Verbinderanordnung nach Anspruch 30, wobei die Verbinderanordnung in dem digitalen und/oder analogen Gerät angeordnet ist, das über die Verbinderanordnung mit einem Endgerät zu verbinden ist.

32. Endgerät zur Verwendung in einem Netzwerksystem nach einem der Ansprüche 1-29, das ein Sende-/Empfangsgerät (213) umfasst, um mit anderen Endgeräten in einem Übertragungsmediennetzwerk zu kommunizieren, und einen Controller (214) zum Steuern des Sende-/Empfangsgerätes (213) umfasst.

33. Verfahren zum Verbinden einer Anzahl digitaler und/oder analoger Empfangs- und Sendegeräte (105-107, 108R, 108L, 109-112, 113L, 113R, 114-118, 119L, 119R, 120-125, 126R, 126L, 210-212), wobei das Verfahren folgende Schritte umfasst:
Bereitstellen einer Anzahl von Empfangs- und/oder Sende-Endgeräten (AP, 201-206) und Verbinden der Endgeräte miteinander, um ein Übertragungsmediennetzwerk (100) zu bilden, wobei mindestens eines der Endgeräte dafür ausgelegt ist, Daten zu senden (1-10 Tx) und/oder zu empfangen (1-10 Rx); und
Verbinden anwendungsspezifischer Verbinderanordnungen (GW, 207, 208, 1-10 Tx, 1-10 Rx) mit den Endgeräten, wobei mindestens eine der Verbinderanordnungen dafür ausgelegt ist, Daten zu senden und/oder zu empfangen,
Verbinden der digitalen und/oder analogen Geräte mit den anwendungsspezifischen Verbinderanordnungen (GW, 207, 208, 1-10 Tx, 1-10 Rx); wobei mindestens eine Verbinderanordnung Daten mindestens über Identifizierung umfasst, wobei die Identifizierung dafür verwendet werden kann, einen Datenstrom zwischen verschiedenen Verbinderanordnungen innerhalb des Übertragungsmediennetzwerk (100) einzurichten; und
wobei jedes der Endgeräte in der Lage ist, Audio und/oder Video sowohl an die Verbinderanordnungen zu senden als auch von den Verbinderanordnungen zu empfangen.

## Revendications

1. Système de réseau multimédia pour interconnecter un nombre de dispositifs récepteurs et émetteurs numériques et/ou analogiques (105-107,108R, 108L, 109-112, 113L, 113R, 114-118, 119L, 119R, 120-125, 126R, 126L, 210-212), le système de réseau comprenant:
un nombre de terminaux récepteurs et/ou émetteurs (AP, 201-206) connectés les uns aux autres afin de former un réseau de média de transmission (100) et d'être connectés auxdits dispositifs numériques et/ou analogiques; et
des agencements de connecteurs spécifiques aux applications (GW, 207,208, 1-10 Tx, 1-10 Rx) pour connecter lesdits dispositifs numériques et/ou analogiques auxdits terminaux; dans lequel
au moins un desdits agencements de connecteurs est agencé afin d'émettre (1-10 Tx) et/ou recevoir (1-10 Rx) des données,
**caractérisé en ce que**
au moins un desdits terminaux est agencé afin d'émettre et/ou recevoir des données,
ledit au moins un agencement de connecteur comprend des données concernant au moins l'identification, ladite identification étant utilisable pour établir un flux de données entre différents agencements de connecteurs en utilisant ledit réseau de média de transmission (100); et
chacun desdits terminaux est en mesure à la fois de transmettre vers et de recevoir depuis lesdits agencements de connecteurs au moins un d'un trafic audio et vidéo.

2. Système de réseau selon la revendication 1, dans lequel lesdits agencements de connecteurs sont connectés auxdits terminaux via des interfaces identiques.

3. Système de réseau selon la revendication 1, dans lequel au moins un desdits terminaux et agencements de connecteurs comprend en outre une logique de commande pour commander ladite transmission et/ou réception de données, ladite logique de commande gérant une ou plusieurs de:
- une demande d'allocation de bande passante,
- un établissement de connexion de groupe,
- un réglage d'adresse de groupe,
- une indication de statut de réseau,
- une indication de statut de connexion, et
- une amorce de terminal.

4. Système de réseau selon la revendication 3, dans lequel ladite logique de commande est prévue dans au moins un agencement de connecteur étant un connecteur d'émetteur, pour gérer un ou plusieurs de:
- une demande d'allocation de bande passante,
- un établissement de connexion de groupe,
- une indication de statut de réseau, et
- une indication de statut de connexion.

5. Système de réseau selon la revendication 3, dans lequel ladite logique de commande est prévue dans au moins un agencement de connecteur étant un connecteur de récepteur, pour gérer au moins un de:
- un réglage d'adresse de groupe,
- une indication de statut de réseau, et
- une indication de statut de connexion.

6. Système de réseau selon la revendication 4, dans lequel ladite logique de commande est en outre prévue dans au moins un terminal pour gérer au moins un de:
- une indication de statut de réseau,
- une indication de statut de connexion, et
- une amorce de terminal à la mise sous tension ou après la déconnexion des agencements de connecteurs.

7. Système de réseau selon la revendication 1, dans lequel un groupe desdits agencements de connecteurs est constitué d'un agencement de connecteur d'émetteur et au moins un agencement de connecteur de récepteur ayant la même identification.

8. Système de réseau selon la revendication 7, dans lequel ladite identification est l'utilisateur et/ou au moins partiellement pré-définie au moyen d'un moyen d'identification (219, 222).

9. Système de réseau selon la revendication 1, dans lequel au moins un du nombre de dispositifs récepteurs et émetteurs est un dispositif émetteur (210), et dans lequel la sortie du dispositif émetteur (210), à transmettre comme données par un terminal émetteur sur ledit réseau de média de transmission, est transformé en un format numérique supporté par le réseau de média de transmission (100).

10. Système de réseau selon la revendication 9, dans lequel la transformation est faite lors d'un adaptation d'émetteur (217) dans un des agencements de connecteurs, qui est d'un côté connecté à une sortie du dispositif émetteur et de l'autre côté à une entrée du terminal émetteur.

11. Système de réseau selon la revendication 10, dans lequel au moins un du nombre de dispositifs émetteurs et récepteurs est un dispositif récepteur (211), et dans lequel un terminal récepteur pour recevoir les données transformées provenant du réseau est connecté audit dispositif récepteur, et comprend un agencement de connecteur de récepteur (208) pour retransformer lesdites données en un format à remettre au dispositif récepteur.

12. Système de réseau selon la revendication 11, dans lequel le courant de données transformé provenant d'un dispositif émetteur (210) est capturé dans le terminal (202, 203) et retransformé lors d'une adaptation de récepteur (220) dans l'agencement de connecteur de récepteur (208) et remis à un du nombre de dispositif récepteurs et émetteurs étant un dispositif récepteur (211, 212).

13. Système de réseau selon la revendication 1, dans lequel les signaux provenant de plusieurs du nombre de dispositifs récepteurs et émetteurs sont transmis simultanément à travers le réseau.

14. Système de réseau selon la revendication 1, dans lequel chaque agencement de connecteur comprend un agencement de jeu d'identification afin de configurer les dispositifs récepteurs et émetteurs étant des récepteurs sur les émetteurs correspondants.

15. Système de réseau selon la revendication 1, dans lequel un agencement de connecteur comprend un moyen pour recevoir un signal analogique, un moyen pour convertir ledit signal en un signal numérique et un moyen pour transmettre ledit signal numérique sur ledit réseau par l'intermédiaire d'un desdits terminaux.

16. Système de réseau selon la revendication 1, dans lequel un agencement de connecteur comprend un moyen afin de recevoir un signal numérique provenant dudit signal, à travers un desdits terminaux, un moyen pour convertir ledit signal en un signal analogique et un moyen pour coupler ledit signal analogique à un du nombre de dispositifs récepteurs et émetteurs étant un dispositif analogique.

17. Système de réseau selon la revendication 15, dans lequel ledit signal analogique est un de signaux audio ou vidéo, qui peuvent être comprimés et/ou codés.

18. Système de réseau selon la revendication 9, dans lequel lesdits agencements de connecteur comprennent des éléments d'identification comprenant des commutateurs pour régler des identités uniques pour les agencements de connecteurs récepteurs et émetteurs.

19. Système de réseau selon la revendication 1, dans lequel tous lesdits terminaux sont identiques, et/ou tous desdits agencements de connecteurs sont identiques.

20. Système de réseau selon la revendication 1, dans lequel ledit réseau a une topologie en anneau ou en étoile.

21. Système de réseau selon la revendication 1, dans lequel lesdits terminaux sont connectés les uns aux autres en série et/ou en parallèle afin de former ledit réseau de média de transmission.

22. Système de réseau selon la revendication 1, dans lequel ledit réseau est implémenté comme un de MOSTnet ou IEEE 1394.

23. Système de réseau selon la revendication 1, dans lequel ledit terminal et agencement de connecteur sont intégrés.

24. Système de réseau selon la revendication 1, dans lequel lesdits terminaux et agencements de connecteurs sont alimentés électriquement via la même source.

25. Système de réseau selon la revendication 1, dans lequel au moins un des agencements de connecteurs est disposé dans ledit dispositif numérique et/ou analogique;

26. Système de réseau selon la revendication 1, dans lequel le système comprend une connexion sans fil entre au moins un desdits agencements de connecteurs et des terminaux et entre terminaux.

27. Système de réseau selon la revendication 1, dans lequel le réseau est accessible en externe.

28. Système de réseau selon la revendication 18, dans lequel ledit élément d'identification est commandé à distance.

29. Système de réseau selon la revendication 1, dans lequel lesdits terminaux et agencements de connecteurs sont connectés sans fil.

30. Agencement de connecteur à utiliser dans un système de réseau selon une quelconque des revendications 1 à 29 comprenant:
des connecteurs pour la connexion auxdits dispositifs;
un moyen de connexion pour la connexion aux terminaux;
au moins un d'une adaptation de récepteur (220) et d'une adaptation d'émetteur (217), pour transformer des données entre un format de données desdits dispositifs et un format de données dudit réseau de média de transmission; et
un moyen d'identification fournissant des données concernant l'identification, ladite identification étant utilisable pour établir un flux de données entre différents agencements de connecteurs à l'intérieur dudit réseau de média de transmission (100).

31. Agencement de connecteur selon la revendication 30, dans lequel l'agencement de connecteur est agencé dans le dispositif numérique et/ou analogique afin d'être connecté à un terminal via ledit agencement de connecteur.

32. Terminal à utiliser dans un système de réseau selon une quelconque des revendications 1 à 29, comprenant un émetteur/récepteur (213) pour communiquer avec d'autres terminaux sur un réseau de média de transmission, et un contrôleur (214) pour commander ledit émetteur/récepteur (213).

33. Procédé d'interconnexion d'un nombre de dispositifs récepteurs et émetteurs numériques et/ou analogiques (105-107,108R, 108L, 109-112, 113L, 113R, 114-118, 119L, 119R, 120-125, 126R, 126L, 210-212), le procédé comprenant les étapes consistant à:
fournir un nombre de terminaux récepteurs et/ou émetteurs (AP, 201,206) et connecter lesdits terminaux les uns aux autres afin de former un réseau de média de transmission (100), dans lequel au moins un desdits terminaux est agencé afin de transmettre (1-10 Tx) et/ou recevoir (1-10 Rx) des données;
connecter des agencements connecteurs spécifiques à une application (GW, 207,208,1-10 Tw, 1-10 Rx) auxdits terminaux, dans lequel au moins un desdits agencements de connecteurs est agencé afin d'émettre et/ou recevoir des données;
connecter lesdits dispositifs numériques et/ou analogiques auxdits agencements de connecteurs spécifiques à une application (GW, 207, 208,1-10 Tx, 1-10 Rx); dans lequel au moins un agencement de connecteur comprend des données concernant au moins l'identification, ladite identification étant utilisable afin d'établir un flux de données entre différents agencements de connecteurs à l'intérieur dudit réseau de média de transmission (100); et
dans lequel chacun desdits terminaux est en mesure à la fois d'émettre vers et de recevoir depuis lesdits agencements de connecteurs au moins un d'un trafic audio et vidéo.
